# EUROPEAN PATENT SPECIFICATION

(11) **EP 2 222 804 B1**
(45) Date of publication and mention of the grant of the patent: **23.01.2013**
(21) Application number: 08862140.4
(22) Date of filing: 17.12.2008
(51) Int. Cl.: C09D 167/00, C09D 175/04

(54) **THERMAL CURABLE POLYESTER POWDER COATING COMPOSITION**
POLYESTERHARZ-PULVERLACKZUSAMMENSETZUNG
COMPOSITION DE REVÊTEMENT EN POUDRE DE POLYESTER THERMODURCISSABLE

(30) Priority: 18.12.2007 US 8074
(43) Date of publication of application: 01.09.2010
(73) Proprietor: E. I. du Pont de Nemours and Company, Wilmington, DE 19898 (US)
(72) Inventor: FLOSBACH, Carmen, 42287 Wuppertal (DE); ILAND, Kristina, 51061 Koeln (DE); TEMELTAS, Engin, 51381 Leverkusen (DE)
(74) Representative: DuPont Performance Coatings Biering/Blum/Kimpel
(86) International application number: PCT/US2008/087097
(87) International publication number: WO 2009/079536

(56) References cited:
- EP-A- 0 301 557
- US-A- 5 491 202

## Description

### Field of the Invention

The present invention is directed to a powder coating composition based on specific polyester/polyurethane resins providing high flexibility and excellent mechanical properties of the coating and processability of the powder coating compositions.

### Description of Prior Art

Epoxy, polyester and acrylic resin binders are well-known for the use in thermal curable powder coating compositions. For example, hydroxyl functional polyesters are curable with isocyanates to result in polyurethane powder coatings, see D. Bates, The Science of Powder Coatings, Volume 1, London, 1990, page 56,276-277, 282.

Combinations of different resin binders and curing agents are investigated to receive specific desired properties of the coatings on different substrate surfaces.

EP-A 1209182, EP-A 1323757, WO 02/50147 and WO 2006/082080 refer to coating compositions based on specific polymers, for example, different urethane acrylates, wherein the compositions are cured by ultra violet (UV) radiation.

Thermal curable powder coating compositions based on urethane (meth)acrylates or specific polyester urethanes are disclosed in WO 01/25306, EP-A 702040, EP-A 410242 and WO 95/35332 and refer to good storage stability and increased weather resistance of the coatings,

While current state of the art discloses powder coating compositions having good technology properties, they do not offer in particular the level of high flexibility in combination with a potential of building of thin films. Accordingly, there is a need for powder coating compositions, and methods of application thereof, that meet those requirements.

### Summary of the Invention

The present invention provides a powder coating composition comprising
(A) at least one hydroxyl functional polyester resin binder, and
(B) at least one polyurethane resin as cross-linking agent containing blocked isocyanate groups,
wherein the at least one hydroxyl functional polyester resin binder (A) and the at least one polyurethane resin (B) both having a melting temperature of 60 to 180°C, in particular, 60 to 160°C,

The powder coating composition according to the invention comprising the combination of the specific kind of polyester resins and polyurethane resins with specific kind of blocked isocyanate groups makes it possible to achieve a low melt viscosity along with good storage stability, The powder coating composition according to the invention provides the desired technological properties, in particular, thin films and high flexibility in combination with excellent mechanical properties of the coatings.

### Detailed Description of the Invention

The features and advantages of the present invention will be more readily understood, by those of ordinary skill in the art, from reading the following detailed description. It is to be appreciated those certain features of the invention, which are, for clarity, described above and below in the context of separate embodiments, may also be provided in combination in a single embodiment. Conversely, various features of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

Slight variations above and below the stated ranges of numerical values can be used to achieve substantially the same results as values within the ranges. Also, the disclosure of these ranges is intended as a continuous range including every value between the minimum and maximum values.

The term "(cyclo)aliphatic" used in the description and the claims encompasses cycloaliphatic, linear aliphatic, branched aliphatic and cycloaliphatic with aliphatic residues. The aromatic or araliphatic diols comprise diols with aromatically and/or aliphatically attached hydroxyl groups.

All the number-average molar mass data stated in the present description are number-average molar masses determined or to be determined by gel permeation chromatography (GPC; divinylbenzene-crosslinked polystyrene as the immobile phase, tetrahydrofuran as the liquid phase, polystyrene standards).

The mentioned melting ranges and thus the melting temperatures may be determined by DSC (differential scanning calorimetry) at heating rates of 10 K/min.

Particularly, the present invention refers to a powder coating composition comprising 5 to 95 wt%, preferably 20 to 80 wt%, more preferably 30 to 70 wt% of the at least one hydroxyl functional polyester resin binder (A), and 95 to 5 wt%, preferably 80 to 20 wt%, more preferably 70 to 30 wt% of the least one polyurethane resin (B), the wt% being based on the total weight of (A) and (B).

Both each the components (A) and (B) have a melting temperature of 60 to 180°C, in particular 60 to 160°C. The melting temperatures are not in general sharp melting points, but instead the upper end of melting ranges with a breadth of, for example, 30 to 150°C.

Both the resins (A) and (B) are very slightly, if at all, soluble in organic solvents conventional used in coatings and/or in water, the solubility amounting, for example, to less than 10, in particular less than 5 g per litre of butyl acetate or water at 20°C.

The polyester resins (A) are hydroxyl-functional resins and have hydroxyl values of, for example, 30 to 300 mg KOH/g, The number-average molar mass is between 500 and 10000, preferably 500 to 5000, most preferably 1000 to 5000.

The production of hydroxyl-functional polyester resins is known to the person skilled in the art, in particular, they in general may be produced by reacting mono-and polyfunctional acids(s) and/or anhydride(s) with diol(s) and polyol(s) in the excess.

Diol(s) and Polyols suitable for the production of the polyester resins (A) are not only diols and polyols in the form of low molar mass compounds defined by empirical and structural formula but also oligomeric or polymeric diols or polyols with number-average molar masses of, for example, up to 800, for example, corresponding hydroxyl-functional polyethers, polyesters or polycarbonates. Low molar mass polyols defined by an empirical and structural formula are, however, preferred.

The person skilled in the art selects the nature and proportion of the mono-and polyfunctional acids(s) and/or anhydride(s) and polyols for the production of polyester resins (A) in such a manner that polyester resins (A) with the above-mentioned melting temperatures are obtained.

The hydroxyl-functional polyester resin (A) may be produced in the presence of a suitable organic solvent (mixture), which, however, makes it necessary to remove the solvent from the resulted resins. Preferably, the production of the polyester resins (A) is carried out without solvent and without subsequent purification operations.

The polyesters of (A) are based on diols and/or polyols selected from the group consisting of hexanediol or 1,4-butanediol as diol and glycerol or tris-2-hydroxyethyl-isocyanurate as a polyol.

The mono-and polyfunctional acids that are used in the preparation of the polyester (A) are , succinic acid, dodecanoic diacid, that based on terephthalic acid, dodecanoic diacid or adipic acid.

The resulted polyester resins assume the form of a mixture exhibiting a molar mass distribution, and they do not require working up and may be used directly as hydroxyl-functional polyester resins (A).

The powder coating composition according to the invention comprises at least one polyurethane resin (B) as cross-linking agent. The polyurethane resins (B) have blocked isocyanate groups. Particularly, the blocked isocyanate groups may be converted back into free isocyanate groups at elevated temperature with elimination of the blocking agent and are then available as reaction partners for the corresponding functional groups of the at least one resin binder (A).

The latent isocyanate content of the polyurethane resin (B) is, for example, in the range from 2 to 21.2 wt%, calculated as NCO and relative to the corresponding underlying polyurethane resins which are free of blocking agent(s).

The production of polyurethane resins with blocked isocyanate groups is known to the person skilled in the art; in particular, they may be produced by reacting polyol(s) with polyisocyanate(s) in excess and reacting the excess free isocyanate groups with one or more blocking agents.

Polyols suitable for the production of the polyurethane resin (B) are polyols as those described for the production of the polyurethane resins (A), in general. The person skilled in the art selects the nature and proportion of the polyisocyanates, the polyols and the blocking agents for the production of polyurethane resins B in such a manner that polyurethane resins (B) with the above-mentioned melting temperatures are obtained.

The polyurethane resin (B) may be produced in the presence of a suitable organic solvent (mixture), which, however, makes it necessary to remove the solvent from the resulted resins. Preferably, the production of the polyurethane resins (B) is carried out without solvent and without subsequent purification operations.

In a first preferred variant, the polyurethane resins (B) are polyurethanes with two blocked isocyanate groups per molecule which can be prepared by reacting 1, 6-hexane diisocyanate with a diol component and with at least one blocking agent in the molar ratio x mol 1, 6-hexane diisocyanate :x-1 mol diol component: 2 mol blocking agent, wherein x means any desired value from 2 to 6, preferably, from 2 to 4.

The diol component can be one single diol or a combination of diols, preferably two to four, in particular two or three diols, wherein in the case of a diol combination each of the diols preferably constitutes at least 10 mol% of the diols of the diol component. The diol component(s) can be (cyclo)aliphatic, aromatic or araliphatic diols. In particular, the one single diol is a (cyclo)aliphatic diol with a molar mass in the range of 62 to 600. In the case of a diol combination, it is preferred, that at least 70 mol%, in particular, 100 mol% of the diols are (cyclo)aliphatic diols, each with a molar mass in the range of 62 to 600.

Diols may furthermore comprise oligomeric or polymeric diols with number-average molar masses of for example, up to 800, as described above.

Examples of diols which are possible as one single diol of the diol component are ethylene glycol, isomeric propane- and butanediols, 1,5-pentanediol, 1,6-hexanediol, 1,10-decanediol, 1,12-dodecanediol, 1,4-cyclohexanedimethanol, hydrogenated bisphenol A and dimer fatty alcohol. Examples of diols which are possible as constituents of the diol component are telechelic (meth)acrylic polymer diols, polyester diols, polyether diols, polycarbonate diols, each with a number-average molar mass of, for example, up to 800 as representatives of oligomeric or polymeric diols, bisphenol A as a representative of low molar mass non-(cyclo)aliphatic diols defined by empirical and structural formula and ethylene glycol, isomeric propane and butanediols, 1,5-pentanediol, 1,6-hexanediol, 1,10-decanediol, 1,12-dodecanediol, neopentyl glycol, butylethylpropanediol, the isomeric cyclohexanediols, the isomeric cyclohexanedimethanols, hydrogenated bisphenol A, tricyclodecanedimethanol, and dimer fatty alcohol as representatives of (cyclo)aliphatic diols defined by empirical and structural formula with a low molar mass in the range of 62 to 600.

Examples for blocking agents that may be used alone or in combination are monofunctional compounds known for blocking isocyanates, such as, the CH-acidic, NH-, SH- or OH-functional compounds known for this purpose. Examples are CH-acidic compounds, such as, acetylacetone or CH-acidic esters, such as, acetoacetic acid alkyl esters, malonic acid dialkyl esters; aliphatic or cycloaliphatic alcohols, such as, n-butanol, 2-ethylhexanol, cyclohexanol; glycol ethers, such as, butyl glycol, butyl diglycol; phenols; oximes, such as, methyl ethyl ketoxime, acetone oxime, cyclohexanone oxime; lactams, such as, caprolactam; azole blocking agents of the imidazole, pyrazole, triazole or tetrazole type.

1, 6-hexane diisocyanate, the diol(s) of the diol component and the at least one blocking agent are preferably reacted together in the absence of solvents. The reactants may be reacted together simultaneously or in two or more synthesis stages. When the synthesis is performed in multiple stages, the reactants may be added in a varied order. The 1, 6-hexane diisocyanate may be reacted, for example, initially with the blocking agent and then with the diol(s) of the diol component or initially with the diol(s) of the diol component and then with blocking agent. However, the diol component may, for example, also be divided into two or more portions, for example, also into the individual diols, for example, such that 1 ,6-hexane diisocyanate is reacted initially with part of the diol component before further reaction with blocking agent and finally with the remaining proportion of the diol component. The individual reactants may in each case be added in their entirety or in two or more portions. The reaction is exothermic and proceeds at a temperature above the melting temperature of the reaction mixture. The reaction temperature is, for example, 60 to 200°C. The molten reaction mixture may be maintained within the desired temperature range by heating or cooling.

Once the reaction carried out in the absence of solvent is complete and the reaction mixture has cooled, solid polyurethanes with two blocked isocyanate groups per molecule are obtained. When low molar mass diols defined by empirical and structural formula are used for synthesis of the polyurethanes with two blocked isocyanate groups per molecule their calculated molar masses are in the range of 572 or above, for example, up to 2000.

The polyurethanes with two blocked isocyanate groups per molecule assume the form of a mixture exhibiting a molar mass distribution. The polyurethanes with two blocked isocyanate groups per molecule do not, however, require working up and may be used directly as polyurethane resins (B).

In a second preferred variant, the polyurethane resins (B) are polyurethanes with two blocked isocyanate groups per molecule which can be prepared by reacting a diisocyanate component, a diol component and at least one blocking agent in the molar ratio of x mol diisocyanate component: (x-1) mol diol component: 2 mol blocking agent, wherein x means any desired value from 2 to 6, preferably, from 2 to 4, wherein 50 to 80 mol % of the diisocyanate component is formed by 1,6-hexane diisocyanate, and 20 to 50 mol % by one or two diisocyanates, each forming at least 10mol of the diisocyanate component and being selected from the group consisting of totuylene diisocyanate, diphenylmethane diisocyanate, dicylohexylmethane diisocyanate, isophorone diisocyanate, trimethylhexane diisocyanate, cyclohexane diisocyanate, cyclohexanedimethylene diisocyanate and tetramethylenexylylene diisocyanate.

The mol% of the respective diisocyanates add up to 100 mol%.

Preferably, the diisocyanate or the two diisocyanates, forming in total 20 to 50 mol% of the diisocyanate component, are selected from dicyclohexylmethane diisocyanate, isophorone diisocyanate, trimethylhexane diisocyanate, cyclohexane diisocyanate, cyclohexanedimethylene diisocyanate and tetramethylenexylylene diisocyanate.

20 to 100 mol%, preferably of 80 to 100 mol%, of the diol component is formed by at least one linear aliphatic alpha, omega-C2-C12-diol, and 0 to 80 mol%, preferably of 0 to 20 mol%, by at least one diol that is different from linear aliphatic alpha omega-C2-C12-diols and preferably, also from alpha, omega-diols with more than 12 carbon atoms. Each diol of the diol component preferably forms at least 10 mol% within the diol component, and the mol% of the respective diols add up to 100 mol% of the diol component. The diol component preferably consists of no more than four different diols, in particular only of one to three diols. In the case of only one diol, it accordingly comprises a linear aliphatic alpha, omega-C2-C12-diol. The at least one diol differing from linear aliphatic alpha, omega -C2-C12-diols and preferably, also from alpha, omega-diols with more than 12 carbon atoms comprises in particular (cyclo)aliphatic diols defined by empirical and structural formula with a low molar mass in the range of 76 to 600.

The proportion of possible non-(cyclo)aliphatic diols preferably amounts to no more than 30 mol% of the diols of the diol component. Preferably, the diol component does not comprise any non-(cyclo)aliphatic diols. Most preferably, it does not comprise any diols that are different from linear aliphatic alpha, omega-C2-C12-diols, but rather consists of one to four, preferably, one to three, and in particular only one linear aliphatic alpha, omega-C2-C12-diol.

Examples of linear aliphatic alpha, omega-C2-C12-diols that may be used as one single diol or as constituents of the diol component are ethylene glycol, 1,3-propanediol, 1,4-butanediol, 1,5-pentanediol, 1,6-hexanediol, 1,10-decanediol and 1,12-dodecanediol.

Examples of diols that are different from linear aliphatic alpha, omega-C2-C12-diols and may be used in the diol component are telechelic (meth)acrylic polymer diols, polyester diols, polyether diols, polycarbonate diols, each with a number-average molar mass of, for example, up to 800 as representatives of oligomeric or polymeric diols, bisphenol A as a representative of low molar mass non-(cyclo)aliphatic diols defined by empirical and structural formula and those isomers of propanediol and butanediol that are different from the isomers of propanediol and butanediol specified in the preceding paragraph, as well as, neopentyl glycol, butyl ethyl propanediol, the isomeric cyclohexanediols, the isomeric cyclohexanedimethanols, hydrogenated bisphenol A, tricyclodecanedimethanol, and dimer fatty alcohol as representatives of (cyclo)aliphatic diols defined by empirical and structural formula with a low molar mass in the range of 76 to 600.

Examples of the at least one blocking agent are the same as those listed above.

The diisocyanates of the diisocyanate component, the diol(s) of the diol component and the at least one blocking agent are preferably reacted together in the absence of solvents, in the same way as described above, in general. For example, the diisocyanates of the diisocyanate component may be reacted initially with blocking agent and then with the diol(s) of the diol component or initially with the diol(s) of the diol component and then with blocking agent. However, the diol component may, for example, also be divided into two or more portions, for example, also into the individual diols, for example, such that the diisocyanates of the diisocyanate component are reacted initially with part of the diol component before further reaction with blocking agent and finally with the remaining proportion of the diol component. In a very similar manner, however, the diisocyanate component may, for example, also be divided into two or more portions, for example, also into the individual diisocyanates, for example, such that the diol component and blocking agent are reacted initially with part of the diisocyanate component and finally with the remaining proportion of the diisocyanate component.

Once the reaction carried out in the absence of solvent is complete and the reaction mixture has cooled, solid polyurethanes with two blocked isocyanate groups per molecule are obtained. When low molar mass diols defined by empirical and structural formula are used for synthesis of the polyurethanes with two blocked isocyanate groups per molecule, their calculated molar masses are in the range of 570 or above, for example, up to 2000.

The polyurethanes with two blocked isocyanate groups per molecule assume the form of a mixture exhibiting a molar mass distribution, and they do not, however, require working up and may be used directly as polyurethane resins (B).

In a third preferred variant, the polyurethane resins B are polyurethanes with blocked isocyanate groups which can be prepared by reacting a trimer of a (cyclo)aliphatc diisocyanate, 1,6-hexane diisocyanate, a diol component and at least one blocking agent in the molar ratio of 1 mol trimer of a (cyclo)aliphatic diisocyanate : x mol 1,6-hexane diisocyanate : x mol diol component : 3 mol blocking agent, wherein x means any desired value from 1 to 6, preferably, from 1 to 3.

The diol component is one single linear aliphatic alpha, omega C2-C12 diol or a combination of two to four, preferably, two or three, (cyclo)aliphatic diols, wherein in the case of diol combination, each of the diols makes up at least 10 mol % of the diols of the diol combination and the diol combination consists of at least 80 mol % of at least one linear aliphatic alpha, omega C2-C12 diol

The trimer of the (cyclo)aliphatic diisocyanate is polyisocyanates of the isocyanurate type, prepared by trimerization of a (cyclo)aliphatic diisocyanate. Appropriate trimerization products derived, for example, from 1,4-cyclohexanedimethylenediisocyanate, in particular, from isophorondiisocyanate and more particularly, from 1,6-hexanediisocyanate, are suitable. The industrially obtainable isocyanurate polyisocyanates generally contain, in addition to the pure trimer, i.e., the isocyanurate made up of three diisocyanate molecules and comprising three NCO functions, isocyanate-functional secondary products with a relatively high molar mass. Products with the highest possible degree of purity are preferably used. In each case, the trimmers of the (cyclo)aliphatic diisocyanates obtainable in industrial quality are regarded as pure trimer irrespective of their content of said isocyanate-functional secondary products with respect to the molar ratio of 1 mol trimer of the (cyclo)aliphatic diisocyanate : x mol 1,6-hexanediisocyanate : x mol diol : 3 mol blocking agent.

Examples of one single linear aliphatic alpha, omega C2-C12 diol or linear aliphatic alpha, omega C2-C12 diols which can be used within the diol combination can be the same as those described above.

Examples of (cyclo)aliphatic diols which can be used within the diol combination in addition to the at least one linear aliphatic alpha,omega C2-C 12 diol making up at least 80 mol % of the diol combination are the further isomers of propane and butane diol, different from the isomers of propane and butane diol cited in the preceding paragraph, and neopentylglycol, butylethylpropanediol, the isomeric cyolohexane diols, the isomeric cyclohexanedimethanols, hydrogenated bisphenol A and tricyclodecanedimethanol.

In the case of the diol combination, preferred diol combinations totaling 100 mol % in each case are combinations of 10 to 90 mol % 1,3-propanediol with 90 to 10 mol % 1,5-pentanediol, 10 to 90 mol % 1,3-propanediol with 90 to 10 mol % 1,6-hexanediol and 10 to 90 mol % 1,5-pentanediol with 90 to 10 mol % 1,6-hexanediol.

Examples of the at least one blocking agent are the same as those listed above.

The trimer of the (cyclo)aliphatic diisocyanate, 1,6-hexanediisocyanate, the diol component and the at least one monofunctional blocking agent are preferably reacted together in the absence of solvents, in the same way as described above, in general. For example, 1,6-hexane diisocyanate may be reacted initially with a mixture of diol component and blocking agent and then with the trimer of the (cyclo)aliphatic diisocyanate or a mixture of the isocyanate-functional components with the diol component and blocking agent or a mixture of the isocyanate-functional components may be reacted initially with blocking agent and then with the diol component. In the case of a diol combination, the diol component may, for example, also be divided into two or more portions, for example, also into the individual (cyclo)aliphatic diols.

Once the reaction carried out in the absence of solvents is complete and the reaction mixture has cooled, solid polyurethanes with blocked isocyanate groups and with number average molar masses in the range of 1,500 to 4,000 are obtained. The polyurethanes with blocked isocyanate groups do not require working up and may be used directly as polyurethane resins (B).

The coating composition according to the invention may contain at least one binder (C) with functional groups reactive with the functional groups of (A) and (B). The binders (C) are different from (A) and (B) and comprise, in particular, conventional binders known to the person skilled in the art. Examples are polyurethane and (meth)acrylic copolymer resins and hybrid binders derived from these classes of binders, for example, with hydroxyl values of, for example, 60 to 300 mg of KOH/g and number-average molar masses of, for example, 500 to 10000. The coating composition according to the invention may contain this binder (C) in amounts in a range up to 30 wt%, optionally, in a range of 1 to 30 wt%, the wt% being based on the total weight of (A), (B) and (C).

The coating compositions of the present invention may further comprise one or more pigments, fillers and/or coating additives, including, but not limited to dyes, fillers, flow control agents, dispersants, thixotropic agents, adhesion promoters, antioxidants, light stabilizers, anticorrosion agents, inhibitors, catalysts, levelling agents, wetting agents, anticratering agents, and mixtures thereof.

The additives are used in conventional amounts known to the person skilled in the art. In case of dual cure coating compositions, generally used photoinitiators are contained therein.

The coating compositions may also contain transparent pigments, color-imparting and/or special effect-imparting pigments and/or fillers, for example, corresponding to a ratio by weight of pigment plus filler: resin solids content in the range from 0:1 to 2:1. Suitable color-imparting pigments are any conventional coating pigments of an organic or inorganic nature. Examples of inorganic or organic color-imparting pigments are titanium dioxide, iron oxide pigments, carbon black, azo pigments, phthalocyanine pigments, quinacridone pigments and pyrrolopyrrole pigments. Examples of special effect pigments are metal pigments, for example, of aluminum, copper or other metals, interference pigments, such as for example, metal oxide-coated metal pigments, for example, iron oxide-coated aluminum, coated mica, such as, for example, titanium dioxide-coated mica, graphite effect-imparting pigments, iron oxide in flake form, liquid crystal pigments, coated aluminum oxide pigments, coated silicon dioxide pigments. Examples of fillers are silicon dioxide, aluminum silicate, barium sulfate, calcium carbonate and talc.

Under heat, the powder coating composition according to the invention show a steep decrease in viscosity in the melting range of its components. The viscosity of the powder coating composition just slightly decreases further by increasing the temperature. The melt viscosity of the powder coating composition of the invention is very low. Measured with a rotational rheometer the minimum melt viscosity is below 30 Pas. Preferred are powder coating compositions of the invention having a melt viscosity of below 10 Pas, particularly below 5 Pas.

The present invention provides a powder coating composition comprising preferably
(A) 5 to 80 wt% of at least one hydroxyl functional polyester resin binder,
(B) 95 to 20 wt% at least one polyurethane resin as cross-linking agent containing locked isocyanate groups.
(C) 0 to 30 wt% and optionally, 1 to 30 wt% of at least one binder different from (A) and (B), having functional groups reactive with the functional groups of (A) and (B), and
(D) 0.1 to 60 wt% of pigments, fillers and/or coating additives,
the wt% amounts based on the total weight of the powder coating composition (A) to (D), wherein the at least one hydroxyl functional polyester resin binder (A) and the at least one polyurethane resin (B) both having a melting temperature of 60 to 180°C, in particular, 60 to 160°C.

Particularly preferred is a powder coating composition comprising
(A) 15 to 60 wt% of at least one hydroxyl functional polyester resin binder,
(B) 85 to 40 wt% at least one polyurethane resin as cross-linking agent containing blocked isocyanate groups,
(C) 0 to 20 wt% and optionally, 1 to 20 wt% of at least one binder different from (A) and (B), having functional groups reactive with the functional groups of (A) and (B), and
(D) 1 to 40 wt% of pigments, fillers and/or coating additives,
the wt% amounts based on the total weight of the powder coating composition (A) to (D), wherein the at least one hydroxyl functional polyester resin binder (A) and the at least one polyurethane resin (B) both having a melting temperature of 60 to 180°C, in particular, 60 to 160°C.

The components of the present invention are mixed, extruded and ground by conventional techniques employed in the powder coatings art familiar to a person of ordinary skill in the art. Typically, all of the components of the present powder coating formulation are added to a mixing container and mixed together. The blended mixture is then melt blended, for example, in a melt extruder. The extruded composition is then cooled and broken down and ground to a powder. The ground powder is subsequently screened to achieve the desired particle size, for example, an average particle size (mean particle diameter) of 20 to 200 µm, determined by means of laser diffraction.

It is possible that a predetermined amount of a component of the powder coating components be added, for example, to the polyurethane resin (A) and further components of the composition according to the invention, and then premixed. The premix can then be extruded, cooled, and thereafter pulverized and classified.

The composition according to the invention may also be prepared by spraying from supercritical solutions, NAD "non-aqueous dispersion" processes or ultrasonic standing wave atomization process.

Furthermore, specific components of the powder coating composition according to the invention, for example, additives, pigment, fillers, may be processed with the finished powder coating particles after extrusion and grinding by a "bonding" process using an impact fusion. For this purpose, the specific components may be mixed with the powder coating particles. During blending, the individual powder coating particles are treated to softening their surface so that the components adhere to them and are homogeneously bonded with the surface of the powder coating particles. The softening of the powder particles surface may be done by heat treating the particles to a temperature, e.g., 40 to 100°C, dependent from the melt behavior of the powder particles. After cooling the mixture the desired particle size of the resulted particles may be proceed by a sieving process.

The powder coating compositions of the present invention can be readily applied to metallic and non-metallic substrates. The compositions of the present invention can be used to coat metallic substrates including, but not limited to steel, brass, aluminum, chrome, and mixtures thereof, and also to other substrates including, for example, heat-sensitive substrates, such as, substrates based on wood, plastics and paper, and other substrates based, for example, on glass and ceramics.

Depending upon the requirements placed upon the coated substrate, the surface of the substrate may be subjected to a mechanical treatment, such as, blasting followed by, in case of metal substrates, acid rinsing, or cleaning followed by chemical treatment.

The powder coating composition of this invention may be applied by, e.g., electrostatic spraying, electrostatic brushing, thermal or flame spraying, fluidized bed coating methods, flocking, tribostatic spray application and the like, also coil coating techniques, all of which are known to those skilled in the art.

Prior to applying the coating composition of the invention the substrate may be grounded but not pre-heated, so that the substrate is at an ambient temperature of about 25°C.

In certain applications, the substrate to be coated may be pre-heated before the application of the powder composition according to the invention, and then either heated after the application of the powder composition or not. For example, gas is commonly used for various heating steps, but other methods, e.g., microwaves, infra red (IR), near infra red (NIR) and/or ultra violet (UV) irradiation are also known. The preheating can be to a temperature ranging from 60 to 260°C using means familiar to a person of ordinary skill in the art.

After being applied, the coating can be cured or post-cured by exposing by convective, gas and/or radiant heating, e.g., IR and/or NIR irradiation, as known in the art, to temperatures of, e.g. 100°C to 330°C, preferably, 140°C to 200°C, object temperature in each case, for, e.g., 2 to 20 minutes in case of pre-heated substrates, and, for example, 4 to 30 minutes in case of non-pre-heated substrates.

After being cured, the coated substrate is typically subjected to, for example, either air-cooling, or water quenching to lower the temperature to between, for example, 35 and 90°C.

The substrate is coated with an effective amount of the present powder coating composition so as to produce a dry film thickness that ranges, for example, from 10 to 300 µm, preferably 20 to 100 µm, particularly from 10 to 50 µm for very thin film coatings.

The powder coating compositions according to the invention can be applied directly on the substrate surface as a primer coating or on a layer of a primer which can be a liquid or a powder based primer. The powder coating compositions according to the invention can also be applied as a coating layer of a multilayer coating system based on liquid or powder coats, for example, as clear coat layer applied onto a color-imparting and/or special effect-imparting base coat layer or as pigmented one-layer coat applied onto a prior coating.

The present invention is further defined in the following Examples. It should be understood that these Examples are given by way of illustration only. The present invention is not limited by the illustrative examples set forth hereinbelow, but rather is defined by the claims contained hereinbelow.

### Examples

### Example 1

### Manufacture of a Powder Coating Composition of Prior Art (Comparative Example) and according to the Invention, and Application

**Table 1: (amounts in parts per weight)**

| **Formulation** | **Amounts Examples according to the Invention** | **Amounts Comparative Example** |
|---|---|---|
| OH Polyester resin based on hexandiol, terephtalic acid, glycerine, melting range 70-107°C | 100 | |
| OH Polyester resin ER 6610 (Nippon Ester Co.. Ltd. | | 100 |
| Acrylic resin Acronal 4F | | 1 |
| Polyurethane hardener based on hexamethylene diisocysnate, HDI, caprolactame, hexandiol, decandiol, melting range 80-122°C | 154 | |
| Polyurethane hardener Vestagon B-1065 (Evonik) | | 21 |
| Flow, Addtive: Solplus L 400 /Benzoin; Catalyst: Byk-LP G5018 | 40 | |
| Pigment: Titanium white, Filler: Blancfice N | 120 | 40 |

The ingredients of each formulation are mixed by a Henschel mixer at 3 minutes (min) and 1500 U/min, at a mixing temperature of 30 to 35°C. The resulted mixture is extruded at a temperature of 104 to 106 °C.

The extruded product is then cooled down at room temperature, broken down and grinded to a particle size of about 75 µm. The application of the resulted powder coating composition is proceeded under the known Corona-process onto a metal sheet, with a dry-film thickness of 40 to 50 µm, and cured under heat.

### Example 2

### Test Results

**Table 2:**

| **Formulation** | **Hardening (curing) conditions** | **Bending (Flexibility)** | **Durability** |
|---|---|---|---|
| | | | GSB AL 631-05/2007 |
| | | property (OT) (DIN EN ISO 1519) | |
| | | | (DIN EN ISO 11507) |
| **Example according to the Invention** | 30 min at 160°C | Passed | GSB 1 |
| **Example according to the Invention** | 15 min. at 200° C | Passed | GSB 1 |
| **Comparative example** | 15 min at 200°C | Failed | - |

| | | | |
|---|---|---|---|
| GSB 1 means: > 50% residual glass (60° angle) at 300 h QUV-B test QUV-B (313 nm) test: DIN EN ISO 11507 | | | |

## Claims

1. A powder coating compositton comprising
(A) at least one hydroxyl functional polyester resin binder based on diols and/or polyols selected from the group consisiting of hexanediol, 1,4-butanediol, glycerol and tris-2-hydroxyethyl-isocyanurate, and based on mono-and/or polyfunctional acids selected from the group consisting of terephthalic acid, dodecanoic diacid and adipic acid, and
(B) at least one polyurethane resin as cross-linking agent containing blocked isocyanate groups,
wherein the at least one hydroxy functional polyester resin binder (A) and the at least one polyurethane resin (B) both have a melting temperature of 60 to 180°C.

2. The composition according to claim 1 comprising
(A) 5 to 80 wt% of at least one hydroxyl functional polyester resin binder based on diols and/or polyols selected from the group consisiting of hexanediol, 1,4-butanediol, glycerol and tris-2-hydroxyethyl-isocyanurate, and based on mono-and/or polyfunctional acids selected from the group consisting of terephthalic acid, dodecanoic diacid and adipic acid,
(B) 95 to 20 wt% at least one polyurethane resin as cross-linking agent containing blocked isocyanate groups,
(C) 0 to 30 wt% and optionaliy, 1 to 30 wt% of at least one binder different from (A) and (B), having functional groups reactive with the functional groups of (A) and (B), and
(D) 0.1 to 60 wt% of pigments, fillers and/or coating additives,
the wt% amounts based on the total weight of the powder coating composition (A) to (D), wherein the at least one hydroxyl functional polyester resin binder (A) and the at least one polyurethane resin (B) both having a melting temperature of 60 to 180°C, in particular. 60 to 160°C.

3. The composition according to claim 1 wherein the pbtyester resin binder (A) has a hydroxyl value of 30 to 300 mg KOH/g and a number-average molar mass between 500 to 5000.

4. The composition according to claim 1 wherein the latent isocyanate content of the polyurethane resin (B) is in the range from 2 to 21.2 wt%, calculated as NCO and relative to the corresponding underlying polyurethane resins which are free of blocking agent(s).

5. The composition according to claim 1 wherein the polyurethane resin (B) is a polyurethane with two blocked isocyanate groups per molecule which is the reaction product of 1,6-hexane diisocyanate with a diol component and with at least one blocking agent in the molar ratio x mol 1,6-hexane diisocyante x-1 mol diol component 2 mol blocking agent, wherein x means a value from 2 to 6.

6. The composition according to claim 1 wherein the polyurethane resin (B) is a polyurethane with two blocked isocyanate groups per molecule which is the reaction product of a diisocyanate component, a diol component and at least one blocking agent in the molar ratio of x mol diisocyanate component (x-1) mol diol component 2 mol blocking agent, wherein x means any desired value from 2 to 6, wherein 50 to 80 mol % of the diisocyanate component is formed by 1,6-hexane diisocyanate, and 20 to 50 mol % by one or two diisocyanates, each forming at least 10 mol % of the diisocyanate component and being selected from the group consisting of toluylene diisocyanate, diphehylmethane diisocyanate, dicyclohexylmythane diisocyanate, isophprone diisocyanate, trimethylhexane diisocyanate, cyclohexane diisocyanate, cyclohexanedimethylene diisocyanate and tetramethylenexylene diisocyanate.

7. The composition according to claim 1 wherein the polyurethane resin (B) is a polyurethane with blocked isocyanate groups which is the reaction product of a trimer of a (cyclo)aliphatic diisocyanate, 1,6-hexane diisocyanate, a diol component and at least one blocking agent in the molar ratio of 1mol trimer of a (cyclo)aliphatic diisocyanate x mol 1,6-hexane diisocyanate : x mol diol component 3 mol blocking agent, wherein x means a value from 1 to 6.

8. A process of coating a substrate comprising the steps
(a) applying the powder coating composition of claim 1 on a substrate and
(b) curing the applied composition.

9. A substrate coated with the powder coating composition according to claim 1.

## Patentansprüche

1. Pulverbeschichtungszusammensetzung umfassend
(A) mindestens ein hydroxylfunktionelles Polyesterharzbindemittel auf der Basis von Diolen und/oder Polyolen ausgewählt aus der Gruppe bestehend aus Hexandiol, 1,4-Butandiol, Glycerin und Tris-2-hydroxyethylisocyanurat und auf der Basis von mono- und/oder polyfunktionellen Säuren ausgewählt aus der Gruppe bestehend aus Terephthalsäure, Dodecandisäure und Adipinsäure; und
(B) mindestens ein Polyurethanharz als Vernetzungsmittel, das geblockte Isocyanatgruppen enthält,
wobei das mindestens eine hydroxylfunktionelle Polyesterharzbindemittel (A) und das mindestens eine Polyurethanharz (B) beide eine Schmelztemperatur von 60 bis 180 °C aufweisen.

2. Zusammensetzung nach Anspruch 1, umfassend
(A) 5 bis 80 Gew.-% mindestens eines hydroxylfunktionellen Polyesterharzbindemittels auf der Basis von Diolen und/oder Polyolen ausgewählt aus der Gruppe bestehend aus Hexandiol, 1,4-Butandiol, Glycerin und Tris-2-hydroxyethylisocyanurat und auf der Basis von mono- und/oder polyfunktionellen Säuren ausgewählt aus der Gruppe bestehend aus Terephthalsäure, Dodecandisäure und Adipinsäure;
(B) 95 bis 20 Gew.-% mindestens eines Polyurethanharzes als Vernetzungsmittel, das geblockte Isocyanatgruppen enthält,
(C) 0 bis 30 Gew.-% und wahlweise 1 bis 30 Gew.-% mindestens eines Bindemittels, das von (A) und (B) verschieden ist und funktionelle Gruppen aufweist, die mit den funktionellen Gruppen von (A) und (B) reaktiv sind, und
(D) 0,1 bis 60 Gew.-% Pigmente, Füllstoffe und/oder Beschichtungszusatzmittel,
wobei die Gew.-%-Mengen auf das Gesamtgewicht der Pulverbeschichtungszusammensetzung (A) bis (D) bezogen sind, wobei das mindestens eine hydroxylfunktionelle Polyesterharzbindemittel (A) und das mindestens eine Polyurethanharz (B) beide eine Schmelztemperatur von 60 bis 180 °C, insbesondere 60 bis 160 °C, aufweisen.

3. Zusammensetzung nach Anspruch 1, wobei das Polyesterbindemittel (A) einen Hydroxylwert von 30 bis 300 mg KOH/g und eine zahlendurchschnittliche Molmasse zwischen 500 und 5000 aufweist.

4. Zusammensetzung nach Anspruch 1, wobei der latente Isocyanatgehalt des Polyurethanharzes (B) im Bereich von 2 bis 21,2 Gew.-%, als NCO und mit Bezug auf die entsprechenden zugrundeliegenden Polyurethanharze berechnet, die frei von Blockmittel(n) sind, liegt.

5. Zusammensetzung nach Anspruch 1, wobei das Polyurethanharz (B) ein Polyurethan mit zwei geblockten Isocyanatgruppen pro Molekül ist, das das Reaktionsprodukt von 1,6-Hexandiisocyanat mit einer Diolkomponente und mit mindestens einem Blockmittel im Molverhältnis von x Mol 1,6-Hexandiisocyanurat: x-1 Mol Diolkomponente : 2 Mol Blockmittel ist, wobei x einen Wert von 2 bis 6 bedeutet.

6. Zusammensetzung nach Anspruch 1, wobei das Polyurethanharz (B) ein Polyurethan mit zwei geblockten Isocyanatgruppen pro Molekül ist, das das Reaktionsprodukt einer Diisocyanatkomponente, einer Diolkomponente und mindestens eines Blockmittels im Molverhältnis von x Mol Diisocyanuratkomponente : (x-1) Mol Diolkomponente : 2 Mol Blockmittel ist, wobei x irgendeinen erwünschten Wert von 2 bis 6 bedeutet, wobei 50 bis 80 Mol-% der Diisocyanatkomponente durch 1,6-Hexandiisocyanat und 20 bis 50 Mol-% durch ein oder zwei Diisocyanate gebildet sind, wobei jedes mindestens 10 Mol-% der Diisocyanatkomponente bildet und aus der Gruppe ausgewählt ist bestehend aus Toluylendiisocyanat, Diphenylmethandiisocyanat, Dicyclohexylmethandiisocyanat, Isophorondiisocyanat, Trimethylhexandiisocyanat, Cyclohexandiisocyanat, Cyclohexandimethylendiisocyanat und Tetramethylenxylylendiisocyanat.

7. Zusammensetzung nach Anspruch 1, wobei das Polyurethanharz (B) ein Polyurethan mit geblockten Isocyanatgruppen ist, das das Reaktionsprodukt eines Trimers eines (cyclo)aliphatischen Diisocyanats, 1,6-Hexandiisocyanats, einer Diolkomponente und mindestens eines Blockmittels im Molverhältnis von 1 Mol Trimer eines (cyclo)aliphatischen Diisocyanats : x Mol 1,6-Hexandiisocyanat: x Mol Diolkomponente : 3 Mol Blockmittel ist, wobei x einen Wert von 1 bis 6 bedeutet.

8. Verfahren zum Beschichten eines Substrats, das die Schritte umfasst des
(a) Aufbringens der Pulverbeschichtungszusammensetzung nach Anspruch 1 auf ein Substrat und
(b) Aushärtens der aufgebrachten Zusammensetzung.

9. Substrat, das mit der Pulverbeschichtungszusammensetzung nach Anspruch 1 beschichtet ist.

## Revendications

1. Composition de revêtement en poudre comprenant
(A) au moins un liant de résine de polyester à fonctionnalité hydroxyle, à base de diols et/ou de polyols sélectionnés parmi le groupe constitué de l'hexanediol, du 1,4-butanediol, du glycérol et du tris-2-hydroxyéthyl-isocyanurate, et à base d'acides mono- et/ou polyfonctionnels sélectionnés parmi le groupe constitué de l'acide téréphtalique, du diacide dodécanoïque et de l'acide adipique, et
(B) au moins une résine de polyuréthane comme agent de réticulation contenant des groupes isocyanate bloqués;
dans laquelle le au moins un liant de résine de polyester à fonctionnalité hydroxyle (A) et la au moins une résine de polyuréthane (B) ont tous deux une température de fusion de 60 à 180°C.

2. Composition selon la revendication 1, comprenant
(A) 5 à 80 % en pds d'au moins un liant de résine de polyester à fonctionnalité hydroxyle, à base de diols et/ou de polyols sélectionnés parmi le groupe constitué de l'hexanediol, du 1,4-butanediol, du glycérol et du tris-2-hydroxyéthyl-isocyanurate, et à base d'acides mono- et/ou polyfonctionnels sélectionnés parmi le groupe constitué de l'acide téréphtalique, du diacide dodécanoïque et de l'acide adipique,
(B) 95 à 20 % en pds d'au moins une résine de polyuréthane comme agent de réticulation contenant des groupes isocyanate bloqués,
(C) 0 à 30 % en pds et éventuellement, 1 à 30 % en pds d'au moins un liant différent de (A) et (B), ayant des groupes fonctionnels réactifs avec les groupes fonctionnels de (A) et (B), et
(D) 0,1 à 60 % en pds de pigments, de charges et/ou d'additifs de revêtement, les quantités en % en pds étant basées sur le poids total de la composition de revêtement en poudre (A) à (D), dans laquelle le au moins un liant de résine de polyester à fonctionnalité hydroxyle (A) et la au moins une résine de polyuréthane (B) ont tous deux une température de fusion de 60 à 180°C, en particulier, de 60 à 160°C.

3. Composition selon la revendication 1, dans laquelle le liant de résine de polyester (A) a une valeur de groupe hydroxyle de 30 à 300 mg de KOH/g et une masse molaire moyenne en nombre comprise entre 500 et 5 000.

4. Composition selon la revendication 1, dans laquelle la teneur en isocyanate latent de la résine de polyuréthane (B) se situe dans la plage de 2 à 21,2 % en pds, calculée en NCO et par rapport aux résines de polyuréthane sous-jacentes correspondantes qui sont exemptes d'agent(s) bloquant(s).

5. Composition selon la revendication 1, dans laquelle la résine de polyuréthane (B) est un polyuréthane avec deux groupes isocyanate bloqués par molécule qui est le produit réactionnel du diisocyanate de 1,6-hexane avec un composant diol et avec au moins un agent bloquant selon le rapport molaire x mole de diisocyanate de 1,6-hexane: x-1 mole du composant diol: 2 moles d'agent bloquant, dans lequel x signifie une valeur de 2 à 6.

6. Composition selon la revendication 1, dans laquelle la résine de polyuréthane (B) est un polyuréthane avec deux groupes isocyanate bloqués par molécule qui est le produit réactionnel d'un composant diisocyanate, d'un composant diol et d'au moins un agent bloquant selon le rapport molaire de x mole(s) du composant diisocyanate: (x-1) mole(s) du composant diol: 2 moles d'agent bloquant, dans lequel x signifie toute valeur souhaitée de 2 à 6, dans laquelle 50 à 80 % en mole du composant diisocyanate sont formés de diisocyanate de 1,6-hexane, et 20 à 50 % en mole de un ou deux diisocyanate(s), formant chacun au moins 10 % en mole du composant diisocyanate et étant sélectionné parmi le groupe constitué du diisocyanate de toluylène, du diisocyanate de diphéhylméthane, du diisocyanate de dicyclohexylméthane, du diisocyanate d'isophorone, du diisocyanate de triméthylhexane, du diisocyanate de cyclohexane, du diisocyanate de cyclohexanediméthylène et du diisocyanate de tétraméthylènexylylène.

7. Composition selon la revendication 1, dans laquelle la résine de polyuréthane (B) est un polyuréthane avec des groupes isocyanate bloqués qui est le produit réactionnel d'un trimère d'un diisocyanate (cyclo)aliphatique, d'un diisocyanate de 1,6-hexane, d'un composant diol et d'au moins un agent bloquant selon le rapport molaire d'1 mole de trimère d'un diisocyanate (cyclo)aliphatique: x mole(s) de diisocyanate de 1,6-hexane: x mole(s) de composant diol: 3 moles d'agent bloquant, dans laquelle x signifie une valeur de 1 à 6,

8. Procédé de revêtement d'un substrat comprenant les étapes
(a) d'application de la composition de revêtement en poudre selon la revendication 1 sur un substrat et
(b) de durcissement de la composition appliquée.

9. Substrat revêtu de la composition de revêtement en poudre selon la revendication 1.
